# EUROPÄISCHE PATENTSCHRIFT

(11) **EP 2 199 129 B1**
(45) Veröffentlichungstag und Bekanntmachung des Hinweises auf die Patenterteilung: **10.04.2013**
(21) Anmeldenummer: 09014816.4
(22) Anmeldetag: 28.11.2009
(51) Int. Cl.: B60J 7/10

(54) **Spannvorrichtung**
Clamping device
Dispositif de serrage

(30) Priorität: 20.12.2008 DE 102008064293
(43) Veröffentlichungstag der Anmeldung: 23.06.2010
(73) Patentinhaber: Fahrzeugwerk Bernard Krone GmbH, 48480 Spelle (DE)
(72) Erfinder: Rhode, Christian, 49733 Haren (DE); Perk, Thorsten, 26901 Lorup (DE)
(74) Vertreter: Busse & Busse

(56) Entgegenhaltungen:
- WO-A1-2006/089347
- WO-A1-2008/138059
- GB-A- 2 361 732

## Beschreibung

Die Erfindung bezieht sich auf eine Spannvorrichtung zum Spannen von Verzurrmitteln und/oder Spannseilen von Planen, insbesondere von Seitenplanen von Nutzfahrzeugen, in einer Ausbildung nach dem Oberbegriff des Patentanspruches 1.

Spannvorrichtungen der vorgenannten Art sind bekannt, um z.B. Seitenplanen von Nutzfahrzeugen mit dem Boden eines Nutzfahrzeugaufbaus zu verspannen. Für einen Beladungs- bzw. Entladungsvorgang eines derartigen Nutzfahrzeuges sind die Verzurrmittel bzw. Spannseile zu lösen, um die Seitenplane öffnen zu können. Wesentlich ist, dass in die Seitenplanen mittels der Verzurrmittel und/oder der Spannseile eine hinreichende Spannkraft in vertikaler Richtung eingebracht werden kann, um während einer Arbeitsfahrt eines Nutzfahrzeuges Seitenplanenbewegungen möglichst zu vermeiden.

Aus der W02006/089347 ist eine Spannvorrichtung der eingangs genannten Art bekannt, bei der die Verzurrmittel endseitig mit einem Verzurrhaken verbunden sind, in den ein Spannelement in Gestalt eines Schwenkriegels eingreift und im Verlaufe der Überführung des Schwenkriegels in die Spannendstellung mittels eines Pneumatikzylinders den Verzurrhaken nach unten bewegt. In dieser Stellung ist das Verzurrmittel gespannt und wird durch den Pneumatikzylinder in der Spannendstellung gehalten. Nachteilig ist zunächst, dass das Spannelement in seiner Spannendstellung über die Außenfläche eines Nutzfahrzeugaufbaus hinausragt, was sich ungünstig auf den Luftwiderstand des Fahrzeuges und damit auch auf die Fahrgeräusche und den Kraftstoffverbrauch auswirkt. Darüber hinaus ist nachteilig, dass im Falle eines Druckabfalls im Pneumatikzylindersystem, ausgelöst z.B. durch Leckagen oder abgerissene oder abgeknickte Leitungen, der gespannte Zustand der Plane nicht beibehalten werden kann.

Aus der WO 2008/138059 A1 ist eine Spannvorrichtung der eingangs genannten Art bekannt, bei der mittels eines Pneumatikzylinders ein Schwenkhebel in eine Spannendstellung zu bewegen ist, in der dessen Riegel von einem schwenkbaren Spriegel zu hintergreifen ist. In dieser Verriegelungsstellung kann der Spannhebel auch bei einem Ausfall des pneumatischen Zylinders gehalten werden. Der Sperrriegel zum Verriegeln des Spannhebels ist in seiner Ausgangsstellung in einer Ausnehmung gelegen, aus der er manuell herausbewegt werden muss. Eine automatische Verriegelung ist mithin mit dieser Spannvorrichtung nicht möglich. Auch der Entriegelungsvorgang ist von der Bedienperson auszulösen, so dass ein erhöhter Bedienaufwand und ein erheblicher Kraftaufwand zur Betätigung dieser Vorrichtung notwendig ist.

Aus der GB 2361732 ist eine Planenbefestigung für Planen von Nutzfahrzeugen bekannt, bei der entlang einer Gleitschiebeführung schwenkbare Feststeller vorgesehen sind, die hakenförmige Befestigungen an ihren einer Seitenplane zugewandten Bereichen haben. An den Seitenplanen sind Gurte aufgeschweißt, die an ihren Enden Befestigungshaken tragen, die die Feststeller hintergreifen können. Durch eine einwärts gerichtete Schwenkbewegung können die schwenkbaren Feststeller in eine einwärts verschwenkte Position gebracht werden, in der sie den Riegel der Plane hintergreifen. Zur Entriegelung sind diese jeweils von Hand zu entriegeln.

Es ist Aufgabe der vorliegenden Erfindung, eine Spannvorrichtung der eingangs genannten Art zu schaffen, bei der der gespannte Zustand der Plane erhalten bleibt, auch wenn im Antriebssystem Systemfehler auftreten sollten, die darüber hinaus jedoch in der Lage ist, den Spannvorgang zu vereinfachen und insbesondere auch sicherstellt, dass im Notfall die Spannvorrichtung noch bedient werden kann.

Zur Lösung dieser Aufgabe zeichnet sich die Spannvorrichtung der eingangs genannten Art durch die im kennzeichnenden Teil des Anspruchs 1 angegebenen Merkmale aus.

Damit ist eine Spannvorrichtung zur Verfügung gestellt, bei der durch die Verriegelbarkeit eine Sicherungsvorrichtung realisiert ist, die dafür sorgt, dass im Falle eines Druckabfalls in einem verwendeten Pneumatikspannsystem, beispielsweise ausgelöst durch abgerissene Leitungen oder durch einen Verlust des Vorratsdruckes durch Leckagen, der gespannte Zustand der Plane beibehalten wird. Die mechanische Verriegelbarkeit ist auch von wesentlichem Vorteil, wenn bei Ausfall der Antriebseinheit eine Spannkraft durch die Antriebseinheit nicht mehr beibehalten werden kann.

Die die Verriegelbarkeit darstellende Sicherungsvorrichtung ist dabei derart ausgebildet, dass eine Verriegelung automatisch erfolgt, wenn das Spannelement aus seiner Ausgangslage in die Spannendstellung überführt ist. Dazu ist innerhalb des Gehäuses ein Verriegelungsbock vorgesehen, der entsprechende Riegel und eine Steuerkurve als Kulissenbahn haben kann, an der ein Verriegelungselement, beispielsweise eine Verriegelungsplatte, derart entlanggleitet, dass es entsprechende Riegelteile des Verriegelungsblockes so bewegt, z.B. verschwenkt, dass ein dem Spannelement zugeordnetes Verriegelungselement unter den hochbewegten Riegel des Verriegelungsblockes bewegt werden kann und in der Spannendstellung über das Verriegelungselement des Spannelementes schwerkraftbedingt fällt. Andere Ausgestaltungen sind selbstverständlich ebenfalls möglich.

Zudem ist noch eine manuelle Notlöseeinrichtung vorgesehen, die den Riegel des Verriegelungsblockes z.B. untergreift und durch eine Bewegung nach oben einen Entriegelungsvorgang auslöst. Als Antrieb wird vorzugsweise ein doppelt wirkender Pneumatikzylinder verwendet. Die Entriegelungsplatte gleitet an der Kulissenführung des Verriegelungsblockes entlang und ist relativ beweglich zu dem Verriegelungselement des Spannelementes ausgebildet, so dass ein Überführen des Riegels des Verriegelungsblockes in eine angehobene Freigabestellung erfolgen kann. Danach kann durch eine Relativbewegung das Riegelelement auf die Notlöseeinrichtung bewegt werden.

Weitere vorteilhafte Ausgestaltungen der Erfindung sind in den Ansprüchen 2 bis 14 angegeben.

Zur weiteren Erläuterung der Erfindung wird auf die nachfolgende Beschreibung und die Zeichnung verwiesen. In der Zeichnungen zeigen:

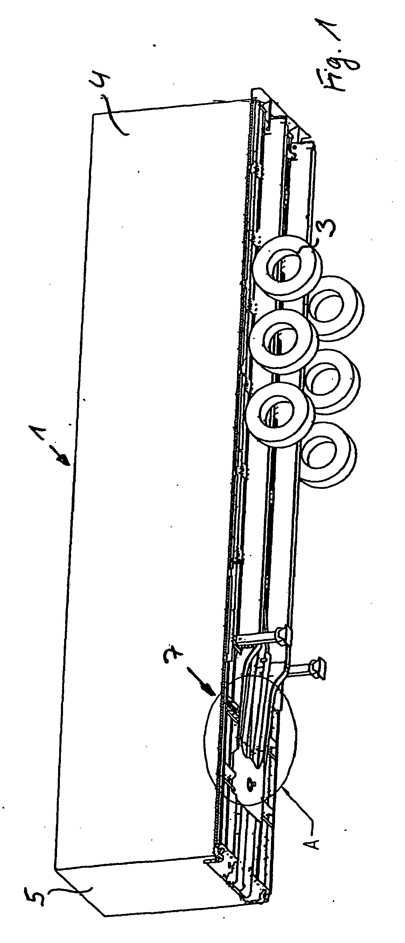

- Fig. 1: in einer perspektivischen Darstellung ein Ausführungsbeispiel eines Nutzfahrzeugaufbaus mit einem Ausführungsbeispiel einer zentralen Spannvorrichtung nach der Erfindung;
- Fig. 2: ausschnittsweise vergrößert das Ausführungsbeispiel der Spannvorrichtung nach Fig. 1;
- Fig. 3: vergrößert die Einzelheit "B" in Fig. 2;
- Fig. 4: perspektivisch das Ausführungsbeispiel einer Spannvorrichtung nach der Erfindung in der Spannendstellung des Spannelementes im verriegelten Zustand;
- Fig. 5: die Spannvorrichtung nach Fig. 4 in der Spannausgangsstellung im entriegelten Zustand;
- Fig. 6: die Spannvorrichtung nach den Fig. 4 und 5 im Verlaufe ihrer Bewegung aus der Spannausgangsstellung in die Spannendstellung;
- Fig. 7: in einer Ausschnittsdarstellung (Seitendarstellung) den Bereich des Verriegelungsblockes und der Verriegelungselemente des Spannelementes im verriegelten Zustand;
- Fig. 8: eine zu Fig. 7 analoge Darstellung während eines Entriegelungsvorganges;
- Fig. 9: eine zu den Fig. 7 und 8 analoge Darstellung in einem Zustand des Aufhebens der Verriegelung;
- Fig. 10: eine zu den Fig. 7 bis 9 analoge Darstellung während des Überführens des Spannelementes aus der Spannendstellung in die Ausgangsstellung; und
- Fig. 11: eine zu den Fig. 7 bis 10 analoge Darstellung während des Überführens des Spannelementes aus der Spannausgangslage in die Spannendstellung in einem Zustand, wo der Verriegelungsblock gerade angehoben wird.

In der Zeichnung sind allgemein gleichwirkende Teile mit übereinstimmenden Bezugszeichen versehen. In der Zeichnung ist mit 1 ein Nutzfahrzeugaufbau beziffert, der ein Chassis 2, Räder 3 sowie Seitenplane 4 neben einer Vorderwand 5 aufweist. Die Seitenplane 4 soll für einen Beladungs- und Entladungsvorgang seitlich wegzuschieben sein, um den Laderaum zugänglich zu machen.

Im Einzelnen nicht näher ersichtlich sind Verzurrmittel und/oder Spannseile vorgesehen, um die Seitenplane 4 in vertikaler Richtung zu spannen. Dies ist bei dem gezeigten Ausführungsbeispiel so gestaltet, dass sich die Seitenplane 4 bis zum unteren Bereich des Chassis 2 erstreckt und über eine zentrale Spannvorrichtung 7 auf jeder Seite des Chassis 2 die Verzurrmittel bzw. die Spannseile zu spannen sind. Im Einzelnen nicht näher ersichtlich sind im rückwärtigen Endbereich auf jeder Seite jeweils eine Spannrolle vorgesehen, um die Seitenplane in horizontaler Richtung zu spannen.

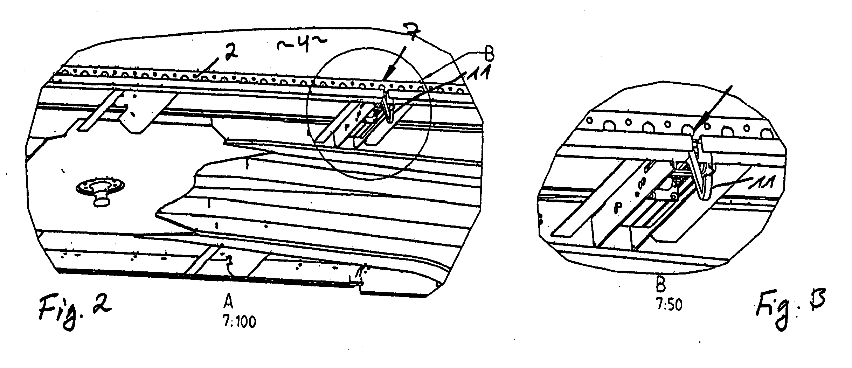

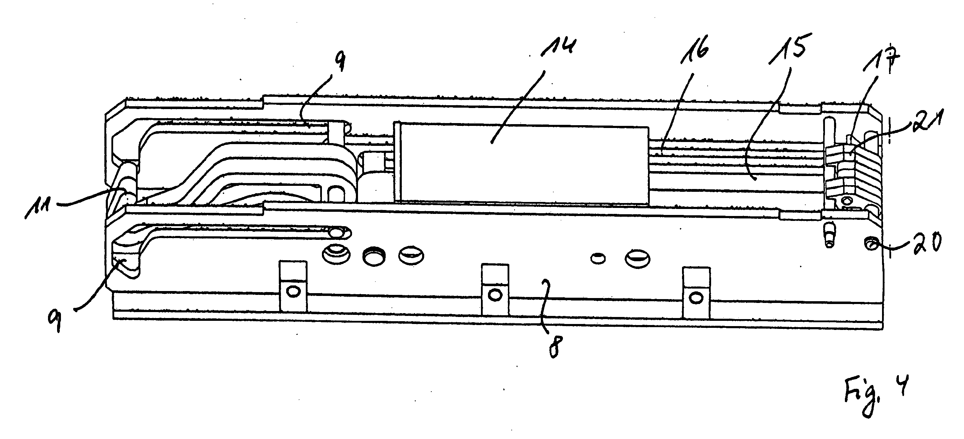

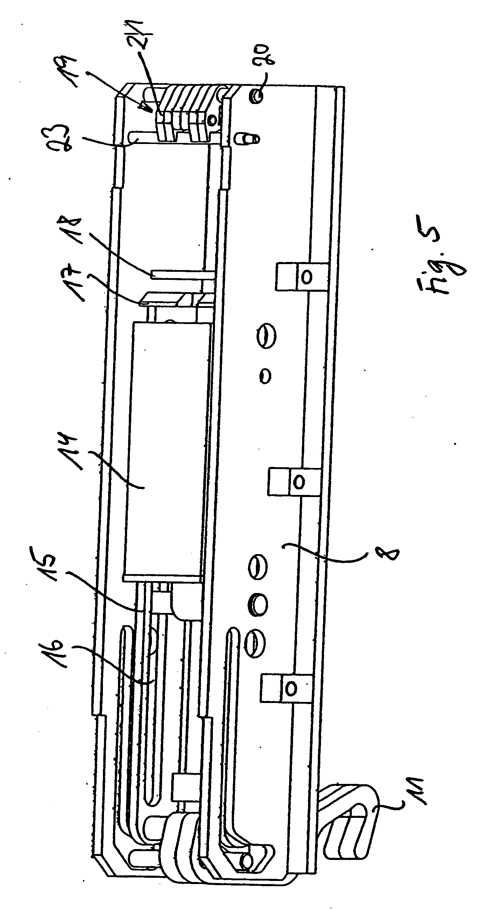

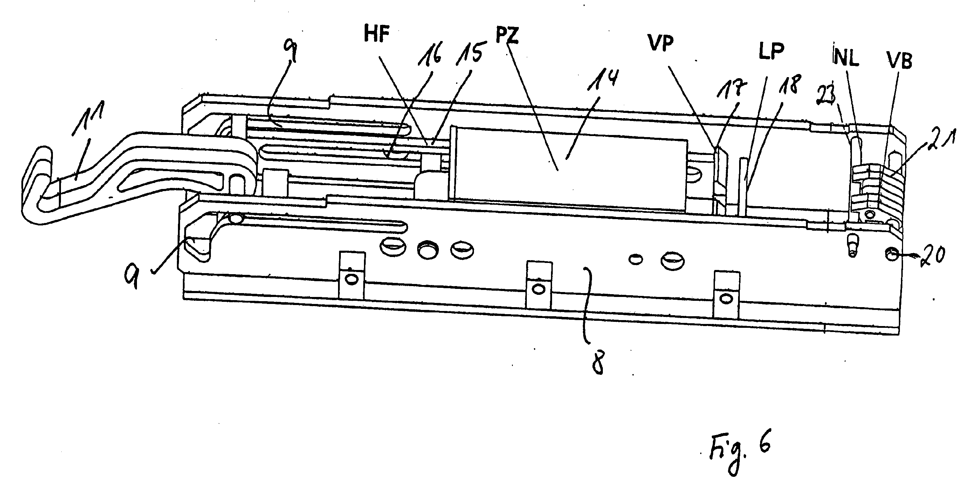

Die Spannvorrichtung 7 ist, wie näher aus den Fig. 2 und 3 hervorgeht, an der Unterseite des Nutzfahrzeugaufbaus 1 vorgesehen und weist ein Gehäuse 8 auf, in dem auf jeder Seite eine Kulisse 9 eingebracht ist. Diese Kulisse 9 hat eine im wesentlichen abgerundete L-förmige Gestalt und ist nach vorne hin gebogen und abgerundet ausgebildet. Innerhalb dieser Kulisse ist mittels eines Bolzens 10 ein Spannelement 11 in Gestalt eines Spannhakens geführt, das in Fig. 4 in seiner Spannendstellung und in Fig. 5 in seiner Spannausgangsstellung dargestellt ist. Fig. 6 zeigt das Spannelement im Verlaufe seiner Bewegung aus der Spannendstellung in die Spannausgangslage bzw. umgekehrt.

Durch die gebogene bzw. abgekröpfte Ausbildung der Kulisse 9 durchläuft das Spannelement 11 im Verlaufe seiner Bewegung aus der Spannausgangsstellung in die Spannendstellung eine Schwenkbewegung, in der es ein Spannseil oder ein Verzurrmittel ergreifen bzw. einfangen und mitnehmen kann. Das Spannelement 11 bewegt sich im Verlaufe dieser Spannbewegung in das Gehäuse 8 hinein, so dass es bei Erreichen der Spannendstellung innerhalb des Gehäuses und damit insgesamt unterhalb des Nutzfahrzeugaufbaus gelegen ist. Als Antriebseinheit 12 ist in dem gezeigten Ausführungsbeispiel ein doppelt wirkender Pneumatikzylinder 14 vorgesehen. Dieser Pneumatikzylinder 14 kann das Spannelement 11 gegen die Kraft einer Feder 13 in die Spannendstellung überführen. Durch Drucklosschalten des Pneumatikzylinders wird über die Kraft der Feder 13 das Spannelement 11 automatisch in die Spannausgangsstellung überführt. Dies kann z.B. durch eine zentrale Auslöseeinheit zu vollziehen sein.

Erfindungsgemäß ist das Spannelement 11 in der in Fig. 4 gezeigten Spannendstellung verriegelbar, so dass die dazu vorgesehenen Teile eine Sicherungsvorrichtung bilden.

Der doppelt wirkende Zylinder 14 ist nicht nur mit dem Spannelement verbunden, sondern ist über die Führungsteile 15, die ihrerseits eine kulissenartige Führung 16 aufweisen, mit einem Verriegelungselement in Gestalt einer Verriegelungsplatte 17 sowie einem Entriegelungselement, nämlich einer Löseplatte 18 verbunden. Die Löseplatte 18 ist in gewissen Grenzen relativ beweglich zu der Verriegelungsplatte 17. Die Begrenzung der Relativbeweglichkeit wird durch im einzelnen nicht ersichtliche Anschläge gebildet.

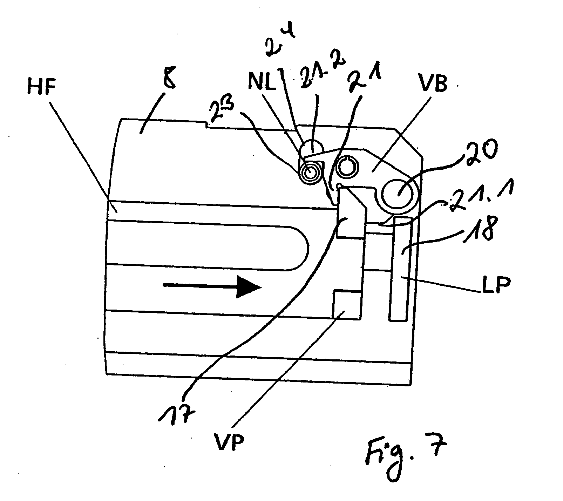

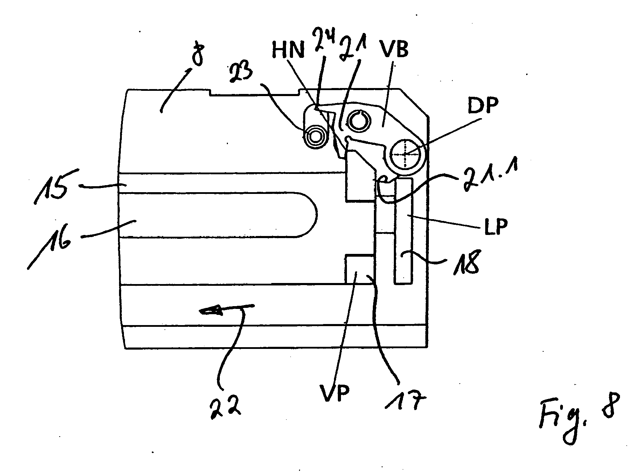

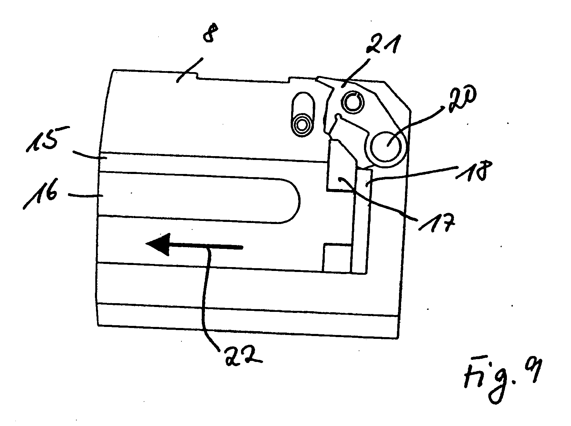

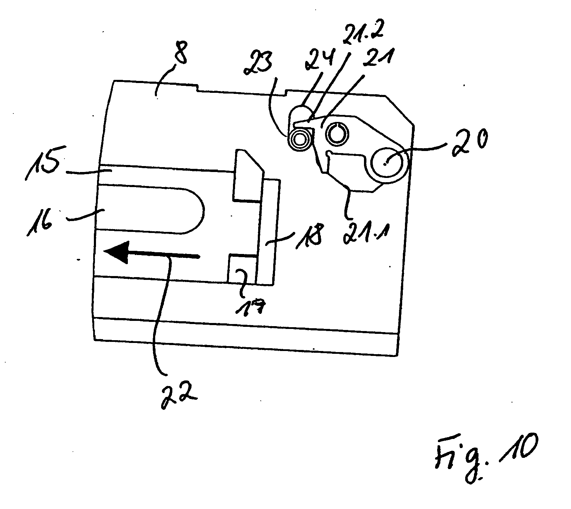

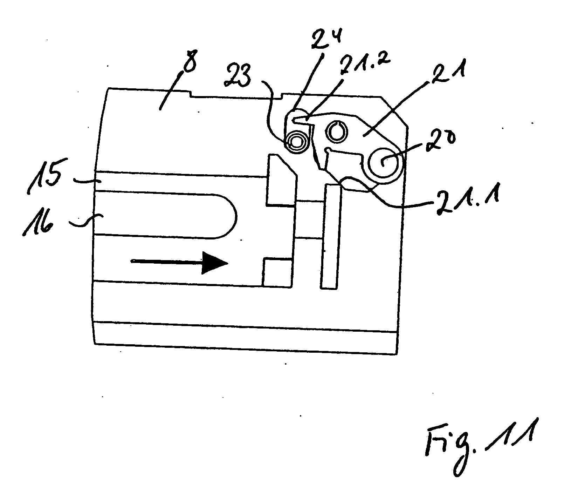

Im hinteren Bereich des Gehäuses 8 ist ein allgemein mit 19 bezifferter Verriegelungsblock vorgesehen, der, wie näher aus den Fig. 7 bis 11 hervorgeht, schwenkbeweglich bei 20 am Gehäuse 8 abgestützt ist und einen Riegel 21 aufweist, der im verriegelten Zustand, d.h. in der Spannendstellung des Spannelementes 11 dieses mechanisch verriegelt, indem er die Verriegelungsplatte 17 übergreift. Die Entriegelungs- bzw. Löseplatte 18 hat zuvor, wie dies Fig. 11 veranschaulicht, den Riegel 21 des Verriegelungsblockes angehoben, indem es an der Führungskulisse 21.1 entlanggleitet und dabei den Verriegelungsblock mit seinem Riegel 21 im Uhrzeigersinn verschwenkt. Der umgekehrte Zustand ist in den Fig. 8 und 9 dargestellt, d.h., wenn das Spannelement aus seiner Spannendstellung in seine Spannausgangslage zum Lösen der Plane verbracht werden soll. Dann tritt die gegensinnige Bewegung in Richtung des Pfeiles 22 ein, wobei, wie dies Fig. 8 andeutet, zunächst die Entriegelungs- bzw. Löseplatte 18 in Richtung des Pfeiles 22 bewegt wird, und zwar relativ zur Verriegelungsplatte 17. Dabei gleitet sie wieder entlang der Führungskulisse 21.1. Ist der Riegel 21 des Verriegelungsblockes ganz hochgeschwenkt (Fig. 9), ist die Verriegelungsplatte 17 entriegelt, wobei die Entriegelungs- bzw. Löseplatte 18 an der Verriegelungsplatte 17 anliegt. Im verriegelten Zustand (Fig. 7) liegt der Riegel 21 mit seiner Nase 21.2 oberhalb eines Bolzens 23, der eine manuelle Notlöseeinrichtung bildet. Dieser Bolzen 23 ist in einem Langloch 24 gelegen und kann dazu genutzt werden, z.B. bei einem Ausfall des Pneumatikzylinders 14 den Riegel 21 nach oben zu bewegen. Insgesamt ist damit eine Spannvorrichtung zur Verfügung gestellt, bei der über die Löseplatte 18 der Verriegelungsblock 21 nach oben gedrückt und infolge Schwerkraft in Arbeitsposition fallen kann. Alternativ ist dies beispielsweise auch mit Federkraft zu vollziehen.

Hat der Pneumatikzylinder 14 seinen maximalen Hub erreicht, liegt die Verriegelungsplatte 17 und die Löseplatte 18 hinter dem Verriegelungsblock 21, so dass bei Zugkräften auf den Spannhaken nur über die Verriegelungsplatte 17 Kräfte in das Verriegelungssystem und damit in das Gehäuse 8 eingeleitet werden. Dies ist möglich, weil die Verriegelungsplatte 17 von der Löseplatte 18 getrennt ist, so dass die Löseplatte 18 fest mit der Kolbenstange des Pneumatikzylinders 14 verbunden sein kann. Die Verriegelungsplatte 17 hingegen wird beweglich auf der Kolbenstange des Pneumatikzylinders, durch zwei Anschläge begrenzt, geführt. Für ein Entriegeln entriegelt die Löseplatte 18 zuerst den Verriegelungsblock 19 bzw. 21 und gibt dann das Spannelement 11 wieder frei.

Wesentlicher Vorteil der Spannvorrichtung ist, dass diese mechanisch sichert, so dass keine Gefahr bei einem eventuellen Druckverlust in einem eingesetzten Pneumatiksystem anfällt. Die Verriegelung erfolgt automatisch beim Öffnen und Schließen. Schließlich sind deutlich höhere Kräfte bei Belastungen des Spannelementes gegenüber einer reinen pneumatischen Sicherung aufzufangen. Es ist insgesamt nur ein Zylinder erforderlich, der sowohl die Plane spannt als auch löst und zusätzlich die Verriegelung durchführt. Insgesamt ist eine kompakte Bauweise möglich, bei der im gespannten Zustand der Teile keinerlei Elemente über die Plane bzw. das Fahrzeugchassis hinausstehen. Zudem ist es auch noch möglich, eine manuelle Notenriegelung durchzuführen, so dass insgesamt eine Spannvorrichtung zur Verfügung gestellt ist, die den vielfältigen Anforderungen im praktischen Einsatz eines Nutzfahrzeugaufbaus genügt.

## Patentansprüche

1. Spannvorrichtung zum Spannen von Verzurrmitteln und/oder Spannseilen von Planen, insbesondere von Seitenplanen (4) von Nutzfahrzeugen (1), mit einem in einem vorzugsweise unterhalb eines Nutzfahrzeugaufbaus (2) angeordneten Gehäuse (8) beispielsweise schwenkbeweglich abgestützten, von einer Antriebseinheit (14) aus einer Spannausgangsstellung in eine Spannendstellung überführbaren, mit einem Verzurrmittel bzw. einem Spannseil verbindbaren Spannelement (11), das in seiner Spannendstellung mechanisch verriegelbar ist und dem ein Verriegelungselement (17) zugeordnet ist, das in der Spannendstellung des Spannelementes (11) einen Riegel (21) eines Verriegelungsblockes (19) hintergreift, wobei der Verriegelungsblock (19) im Verlaufe der Überführung des Spannelementes (11) aus der Spannendstellung in die Spannausgangsstellung automatisch verriegelbar und in umgekehrter Richtung automatisch entriegelbar ist, **dadurch gekennzeichnet, dass** das Verriegelungsteil (17) von dem Riegel (21) des Verriegelungsblockes (19) mittels einer Notlöseeinrichtung (23) manvell entriegelbar ist, dass der Verriegelungsblock (19) schwenkbeweglich an Gehäuseteilen (8) gehaltert und von dem Entriegelungselement (18) beim Überführen des Spannelementes (11) in die Spannendstellung in eine verschwenkte Entriegelungsstellung bewegt wird, dass in der Spannendstellung des Spannelementes (11) der Verriegelungsblock (19) das Verriegelungselement (17) übergreift und dass der Verriegelungsblock (19) eine Kulissenführung (21.1) für das Entriegelungselement (18) aufweist, an der das Entriegelungselement (18) im Verlauf der Bewegungen des Spannelementes (11) in die Spannausgangsstellung oder in die Spannendstellung entlang geführt ist.

2. Spannvorrichtung nach Anspruch 1, **dadurch gekennzeichnet, dass** das Spannelement (11) über einen doppelt wirkenden Pneumatikzylinder (14) in die Spannend- und Spannausgangsstellung überführbar ist.

3. Spannvorrichtung nach Anspruch 1 oder 2, **dadurch gekennzeichnet, dass** das Spannelement (11) an einer innerhalb des Gehäuses geführten Spannelementführung (15) schwenkbeweglich festlegbar ist, die mit dem innerhalb des Gehäuses beweglichen Verriegelungselement (17) und einem Entriegelungselement (18) bewegbar geführt ist.

4. Spannvorrichtung nach einem der Ansprüche 1 bis 3, **dadurch gekennzeichnet, dass** das Verriegelungselement (17) relativ zu dem Entriegelungselement (18) bewegbar ist zwischen vorgesehenen Anschlägen.

5. Spannvorrichtung nach einem der Ansprüche 1 bis 4, **dadurch gekennzeichnet, dass** die manuelle Notlöseeinrichtung (23) innerhalb einer langlochartigen Gehäuseführung (24) angeordnet ist und in der Verriegelungsstellung des Verriegelungsblockes (21) einen Ansatz (21.2) am Verriegelungsblock (19) untergreift, über den der Verriegelungsblock (19) durch die manuelle Notlöseeinrichtung (23) in seine Entriegelungsstellung überführbar ist.

6. Spannvorrichtung nach einem der Ansprüche 1 bis 5, **dadurch gekennzeichnet, dass** das Spannelement (11) aus seiner Spannausgangsstellung von der Antriebseinheit (14) entlang einer gehäuseseitigen Führung (9) in das Gehäuse (8) hinein in die Spannendstellung bewegbar ist.

7. Spannvorrichtung nach Anspruch 6, **dadurch gekennzeichnet, dass** das Spannelement (11) aus seiner Spannausgangsstellung in die Spannendstellung entlang einer gehäuseseitigen Kulissenführung (9) bewegbar ist.

8. Spannvorrichtung nach Anspruch 7, **dadurch gekennzeichnet, dass** das Spannelement (11) im Verlaufe seiner Bewegung aus der Spannausgangsstellung in die Spannendstellung eine kombinierte Schwenkbewegung und translatorische Bewegung durchführt.

9. Spannvorrichtung nach Anspruch 8, **dadurch gekennzeichnet, dass** das Spannelement (11) eine Schwenkbewegung in Richtung der Unterseite eines Fahrzeugaufbaus durchführt.

10. Spannvorrichtung nach einem der Ansprüche 1 bis 9, **dadurch gekennzeichnet, dass** das Spannelement (11) als Spannhaken mit einer zur Unterseite des Nutzfahrzeugaufbaus hin offenen Spannaufnahme ausgebildet ist.

11. Spannvorrichtung nach einem der Ansprüche 1 bis 10, **dadurch gekennzeichnet, dass** die Antriebseinheit (13) einen Pneumatik- oder Hydraulikzylinder (14) aufweist.

12. Spannvorrichtung nach einem der Ansprüche 1 bis 11, **dadurch gekennzeichnet, dass** das Spannelement (11) gegen die Kraft eines Kraftspeichers aus seiner Spannausgangsstellung in die Spannendstellung bewegbar ist.

13. Spannvorrichtung nach Anspruch 12, **dadurch gekennzeichnet, dass** der Kraftspeicher als Zugfeder (13) ausgebildet ist.

14. Spannvorrichtung nach einem der Ansprüche 2 bis 13, **dadurch gekennzeichnet, dass** die Kulisse (9) innerhalb des Gehäuses (8) im Wesentlichen L-förmig mit abgerundeten Übergangsbereichen ausgebildet ist.

## Claims

1. Clamping device for clamping of transport restraints and/or rope lashings of tarpaulins, in particular of side curtains (4) of commercial vehicles (1), with a clamping element (11), which can be attached to a transport restraint or a rope lashing, transferable by a drive unit (14) from an initial clamping position to a final clamping position, supported, for example, pivotably in a housing (8) preferably located under the commercial vehicle superstructure (2), that can be locked mechanically in its final lashing position and is associated with a locking element (17], which engages behind a latch (21) of a locking mechanism block (19) in the final lashing position of the clamping element (11), whereby the locking mechanism block (19) can be automatically locked in the course of transferring the clamping element (11) from the final lashing position to the initial lashing position and automatically unlocked in the opposite direction, **characterised in that** the locking part (17) can be unlocked manually from the latch (21) of the locking mechanism block (19) by means of an emergency release mechanism (23), that the locking mechanism block (19) is mounted to be pivotable on the housing parts (8) and, on transfer of the clamping element (11) to the final lashing position, is moved into a pivoted unlocking position, that, in the final clamping position of the clamping element (11), the locking element (17) overlaps the locking block (19) and that the locking block has a sliding block guide (21.1) for the unlocking element (18.1), along which the unlocking element (18) is guided in the course of movement of the clamping element (11) into the clamp initial position or the final position.

2. Clamping device in accordance with claim 1, **characterised in that** the clamping element (11) can be transferred to the initial clamping position and the final clamping position by means of a double-acting pneumatic cylinder (14).

3. Clamping device in accordance with claim 1 or 2, **characterised in that** the clamping element (11) can be fastened pivotably on a clamping element guide (15), which is guided movably with the locking element (17) movable within the housing and an unlocking element (18).

4. Clamping device in accordance with one of the claims 1 to 3, **characterised in that** the locking element (17) can be moved relative to the unlocking element (18) between stops provided.

5. Clamping device in accordance with one of the claims 1 to 4, **characterised in that** the manual emergency release device (23) is position within a slot-like housing guide (24) and, in the locking position of the locking block (21) engages under a projection (21.2) on the locking block (19), by means of which the locking block (19) can be transferred by the manual emergency release device (23) into its unlocking position.

6. Clamping device in accordance with one of the claims 1 to 5, **characterised in that** the clamping element (11) can be moved from its initial clamping position by the drive unit (14) along a housing-side guide (9) in the housing to the final clamping position.

7. Clamping device in accordance with claim 6, **characterised in that** the clamping element (11) can be moved from its initial clamping position to its final clamping position along a housing-side sliding block guide (9).

8. Clamping device in accordance with claim 7, **characterised in that** the clamping element (11) carries out a combined pivoting and translational movement in the course of its movement from the initial clamping position to the final clamping position.

9. Clamping device in accordance with claim 8, **characterised in that** the clamping element carries out a pivoting movement in the direction of the underside of a vehicle superstructure.

10. Clamping device in accordance with one of the claims 1 to 9, **characterised in that** the clamping element is configured as tensioning hook with a clamp attachment open to the underside of the commercial vehicle.

11. Clamping device in accordance with one of the claims 1 to 10, **characterised in that** the drive unit (13) comprises a pneumatic or hydraulic cylinder (14).

12. Clamping device in accordance with one of the claims 1 to 11, **characterised in that** the clamping element (11) can be moved against the force of an energy accumulator from its initial clamping position to the final clamping position.

13. Clamping device in accordance with claim 12, **characterised in that** the energy accumulator is configured as tensioning spring (13).

14. Clamping device in accordance with one of the claims 2 to 13, **characterised in that** the guide (9) inside the housing (8) is essentially L-shaped with rounded transitions.

## Revendications

1. Dispositif de serrage pour le serrage de moyens d'arrimage et/ou de câbles de serrage de bâches, en particulier de bâches latérales (4) de véhicules utilitaires (1), avec un élément de serrage (11) en appui par exemple de manière pivotante dans un boîtier (8) disposé de préférence sous une structure de véhicule utilitaire (2), pouvant être transféré par une unité d'entraînement (14) d'une position de départ de serrage dans une position de fin de serrage, pouvant être relié à un moyen d'arrimage ou un câble de serrage, qui peut être verrouillé par voie mécanique dans sa position de fin de serrage et auquel est associé un élément de verrouillage (17) qui vient en prise derrière un verrou (21) d'un bloc de verrouillage (19) dans la position de fin de serrage de l'élément de serrage (11), le bloc de verrouillage (19) pouvant être automatiquement verrouillé au cours du transfert de l'élément de serrage (11) de la position de fin de serrage dans la position de départ de serrage et pouvant être automatiquement déverrouillé dans le sens inverse, **caractérisé en ce que** l'élément de verrouillage (17) peut être déverrouillé manuellement par le verrou (21) du bloc de verrouillage (19) à l'aide d'un dispositif de détachement d'urgence (23), **en ce que** le bloc de verrouillage (19) est maintenu de manière pivotante sur des parties de boîtier (8) et est déplacé par l'élément de déverrouillage (18) lors du transfert de l'élément de serrage (11) dans la position de fin de serrage dans une position de déverrouillage pivotée, **en ce que** dans la position de fin de serrage de l'élément de serrage (11), le bloc de verrouillage (19) recouvre l'élément de verrouillage (17) et **en ce que** le bloc de verrouillage (19) présente un guidage de coulisse (21.1) pour l'élément de déverrouillage (18), le long duquel l'élément de déverrouillage (18) est guidé au cours des mouvements de l'élément de serrage (11) dans la position de départ de serrage ou dans la position de fin de serrage.

2. Dispositif de serrage selon la revendication 1, **caractérisé en ce que** l'élément de serrage (11) peut être transféré par un vérin pneumatique (14) à double action dans la position de fin de serrage et la position de départ de serrage.

3. Dispositif de serrage selon la revendication 1 ou 2, **caractérisé en ce que** l'élément de serrage (11) peut être fixé de manière pivotante sur un guidage d'élément de serrage (15) guidé dans le boîtier, lequel guidage est guidé de manière mobile avec l'élément de verrouillage (17) mobile dans le boîtier et un élément de déverrouillage (18).

4. Dispositif de serrage selon l'une quelconque des revendications 1 à 3, **caractérisé en ce que** l'élément de verrouillage (17) est mobile par rapport à l'élément de déverrouillage (18) entre des butées prévues.

5. Dispositif de serrage selon l'une quelconque des revendications 1 à 4, **caractérisé en ce que** le dispositif de détachement d'urgence manuel (23) est disposé dans un guidage de boîtier (24) de type trou oblong et vient en prise sous une saillie (21.2) sur le bloc de verrouillage (19) dans la position de verrouillage du bloc de verrouillage (21), par laquelle le bloc de verrouillage (19) peut être transféré par le dispositif de détachement d'urgence manuel (23) dans sa position de déverrouillage.

6. Dispositif de serrage selon l'une quelconque des revendications 1 à 5, **caractérisé en ce que** l'élément de serrage (11) peut être déplacé de sa position de départ de serrage par l'unité d'entraînement (14) le long d'un guidage (9) côté boîtier dans le boîtier (8) dans la position de fin de serrage.

7. Dispositif de serrage selon la revendication 6, **caractérisé en ce que** l'élément de serrage (11) peut être déplacé de sa position de départ de serrage dans la position de fin de serrage le long d'un guidage de coulisse côté boîtier (9).

8. Dispositif de serrage selon la revendication 7, **caractérisé en ce que** l'élément de serrage (11) réalise au cours de son mouvement de la position de départ de serrage dans la position de fin de serrage un mouvement de pivotement et un mouvement de translation combinés.

9. Dispositif de serrage selon la revendication 8, **caractérisé en ce que** l'élément de serrage (11) réalise un mouvement de pivotement en direction du côté inférieur d'une structure de véhicule.

10. Dispositif de serrage selon l'une quelconque des revendications 1 à 9, **caractérisé en ce que** l'élément de serrage (11) est réalisé comme un crochet de serrage avec un logement de serrage ouvert vers le côté inférieur de la structure de véhicule utilitaire.

11. Dispositif de serrage selon l'une quelconque des revendications 1 à 10, **caractérisé en ce que** l'unité d'entraînement (13) présente un vérin pneumatique ou hydraulique (14).

12. Dispositif de serrage selon l'une quelconque des revendications 1 à 11, **caractérisé en ce que** l'élément de serrage (11) peut être déplacé contre la force d'un accumulateur de force de sa position de départ de serrage dans la position de fin de serrage.

13. Dispositif de serrage selon la revendication 12, **caractérisé en ce que** l'accumulateur de force est réalisé comme un ressort de traction (13).

14. Dispositif de serrage selon l'une quelconque des revendications 2 à 13, **caractérisé en ce que** la coulisse (9) est réalisée dans le boîtier (8) sensiblement en forme de L avec des zones de transition arrondies.
